# EUROPÄISCHE PATENTSCHRIFT

(11) **EP 2 185 893 B1**
(45) Veröffentlichungstag und Bekanntmachung des Hinweises auf die Patenterteilung: **04.09.2013**
(21) Anmeldenummer: 08784389.2
(22) Anmeldetag: 18.07.2008
(51) Int. Cl.: G01B 17/02, G01B 11/10

(54) **VERFAHREN ZUR VOLLSTÄNDIGEN ERFASSUNG DER GEOMETRIE VON PRÜFGEGENSTÄNDEN MITTELS ULTRASCHALL**
METHOD FOR THE COMPLETE DETECTION OF THE GEOMETRY OF TEST OBJECTS BY MEANS OF ULTRASOUND
PROCÉDÉ PERMETTANT LA MESURE COMPLÈTE PAR ULTRASONS DE LA GÉOMÉTRIE D'OBJETS À CONTRÔLER

(30) Priorität: 06.09.2007 DE 102007043004
(43) Veröffentlichungstag der Anmeldung: 19.05.2010
(73) Patentinhaber: V & M Deutschland GmbH, 40472 Düsseldorf (DE)
(72) Erfinder: GROOS, Andreas, 47509 Rheurdt (DE); NITSCHE, Stefan, 45475 Mülheim (DE)
(74) Vertreter: Meissner, Peter E.
(86) Internationale Anmeldenummer: PCT/DE2008/001215
(87) Internationale Veröffentlichungsnummer: WO 2009/030187

(56) Entgegenhaltungen:
- EP-A- 0 845 655
- WO-A-92/09864
- WO-A-93/23820
- US-A- 6 091 500
- US-A1- 2006 225 508

## Beschreibung

Die Erfindung betrifft ein Verfahren zur vollständigen Erfassung der Geometrie von Prüfgegenständen mittels Ultraschall, gemäß dem Oberbegriff des Patentanspruches 1.

Unter Prüfgegenständen werden in diesem Zusammenhang jegliche mittels Ultraschall prüfbare Werkstücke verstanden. Insbesondere bezieht sich diese Erfindung auf langgestreckte Prüfgegenstände aus Stahl, wie beispielsweise Rundstahl oder Rohre. Unter Geometrie wird hier insbesondere der Durchmesser von Rundstählen und der Außen- und Innendurchmesser von Rohren verstanden.

Nachfolgend wird unter dem Begriff "Durchmesser" der Durchmesser von Rundstählen sowie der Außendurchmesser von Rohren verstanden.

Die Ultraschallprüfung zur Erfassung des Durchmessers von Rundstählen oder des Durchmessers und der Wanddicke von Rohren ist seit langem bekannt und bewährt. Sie wird z. B. auch bei Rohren aus Stahl angewandt, um produktionsbegleitend die Einhaltung der geforderten Wanddicke zu überprüfen.

Des Weiteren wird die Ultraschallprüfung verwendet, um eventuell vorhandene Ungänzen im Rundstahl oder in der Rohrwand, wie z. B. Dopplungen, Risse, Kerben, Einwalzungen oder sonstige Oberflächenfehler zu detektieren.

Bei der Prüfung von Rohren werden nach dem Puls-Echoverfahren ausgehend von der Rohraußenoberfläche Ultraschallimpulse in der Wand angeregt und die von der Rohrinnenoberfläche reflektierten Signale wieder empfangen. Aus der Laufzeit des Signals und aus der Schallgeschwindigkeit im zu prüfenden Material lässt sich die Dicke der Rohrwand berechnen und Fehler in der Rohrwand detektieren.

Üblicherweise wird dieses Verfahren produktionsbegleitend und automatisiert sowohl für magnetisier- und nicht magnetisierbare Rohrwerkstoffe eingesetzt.

Zunehmend werden seitens der Kunden Anforderungen dahingehend gestellt, dass der Durchmesser der Prüfgegenstände vollständig dokumentiert sein muss. Bei Rundstählen ist dies insbesondere der Durchmesser, bei Rohren wird der Durchmesser und die Wanddicke, d. h. die Innen- und Außenkontur, vollständig erfasst.

Diese Informationen sind beispielsweise wichtig für Rohre, die hohen Druckbeanspruchungen im Betrieb ausgesetzt sind und nur geringe Ovalitäten aufweisen dürfen (sog. high collapse pipes). Auch für Rohre aus denen hochwertige Drehteile oder Lagerringe hergestellt werden, sind diese Informationen für eine umfangreiche Qualitätssicherung notwendig.

Grundsätzlich können unterschiedliche Messmethoden zur Ermittlung des Durchmessers von Prüfgegenständen angewendet werden:

### Mechanische/Optische Messung

Hier wird nach dem Prinzip eines Messschiebers der Durchmesser mechanisch auf einer Schraubenlinie abgegriffen und der Abstand der mechanischen Führungen mittels Triangulation optisch gemessen.

Nachteilig ist hierbei, dass in regelmäßigen Abständen eine mechanische Kalibrierung notwendig ist. Der Durchmesser wird dabei nur auf einer Schraubenlinie gemessen, was eine vollständige Erfassung der Oberfläche des Prüfgegenstandes sehr aufwändig macht. Zudem beeinflusst der Verschleiß der mechanischen Teile unmittelbar die Messgenauigkeit.

### Optische Messung

Zur lückenlosen Messung wird ein optisches Messsystem mit vielen Achsen oder ein Konturmesssystem (3D-Triangulation) eingesetzt. Diese Verfahren erfordern einen sehr hohen Investitionsaufwand und können nur schwierig in bestehende Anlagen integriert werden.

### Messung mittels Wasservorlaufstreckenmessung bei der Ultraschallprüfung

Bei diesem Verfahren werden für eine lückenlose Beschreibung der Innen- und Außengeometrie von Rohren wasserangekoppelte Ultraschallprüfanlagen verwendet, die mit Wasservorlaufstrecken arbeiten und die komplette Rohroberfläche abscannen. Grundsätzlich sind wasserangekoppelte Ultraschallprüfanlagen z. B. aus der DE 199 31 350 A1 bekannt.

Prüfanlagen, die mittels Wasservorlaufstreckenmessung den Außen- und Innendurchmesser von Rohren ermitteln sind z. B. von der Firma GE Inspection Technologies (Krautkrämer Testing Machines, Grundlagen - Ultraschall Nahtlos-Rohrprüfung, www.geinspectiontechnologies.com) bekannt.

Bekannt sind Anlagen, bei denen die Ultraschall-Prüfeinrichtung um das Rohr kontaktlos oder kontaktierend rotiert.

Bei Letzteren wird über geometrisch definierte Auflagepunkte und eine Messung der Wasservorlaufstrecke mittels Ultraschall ein Kreisbogen erfasst, über den sich unter Annahme eines idealen Kreises ein Durchmesser berechnen lässt.

Nachteilig ist hier, dass ein Verschleiß der mechanischen Bauteile die Messgenauigkeit unmittelbar beeinflusst. Ebenfalls ist eine mechanische Kalibrierung in regelmäßigen Abständen notwendig.

Die aus WO 92/09864 A und WO 93/23820 A bekannten Kalibrierverfahren benutzen zusätzliche externe Referenzkörper.

Zum Anwendungsgebiet der Ultraschallprüfung von Werkstücken, wie z. B. Rohren, zählen u. a. Rotationsanlagen, bei denen der Prüfgegenstand linear transportiert wird und der Ultraschall-(US)-Prüfkopf mechanisch oder elektronisch (phased array) um den Prüfgegenstand rotiert.

Des Weiteren sind Scananlagen bekannt, bei denen der Prüfgegenstand stationär rotiert und der US-Prüfkopf linear über dem Prüfgegenstand bewegt und dabei die Oberfläche abgescannt wird.

Auch sind so genannte Helix-Anlagen bekannt, mit einem schraubenlinienförmigen Transport des Prüfgegenstandes relativ zu einem stationär angeordneten US-Prüfkopf.

Die Messung des Durchmessers eines Prüfgegenstandes erfolgt bei diesen Anlagen durch Messung der Wasservorlaufstrecke in verschiedenen Positionen am Umfang eines Prüfgegenstandes.

Die geometrische Position der US-Prüfköpfe und - falls vorhanden - Auflagepunkte muss zu Beginn jeder Messung exakt bestimmt werden und während der Messung konstant gehalten werden. Dies ist zum einen aufwändig, zum anderen können trotzdem durch Änderungen der Wassertemperatur und damit der Schallgeschwindigkeit im Wasser Ungenauigkeiten auftreten, die heute zwar durch Temperaturmessung und Korrektur teilweise ausgeglichen werden können, die erzielbare Messgenauigkeit ist jedoch gering.

Aufgabe der Erfindung ist es, das bekannte Ultraschallprüfverfahren mit Wasserankopplung und Wasservorlaufstreckenmessung zur Erfassung der Geometrie von Prüfgegenständen, dahingehend weiterzubilden, dass die beschriebenen Nachteile vermieden werden.

Erfindungsgemäß wird diese Aufgabe entsprechend den Merkmalen des Anspruches 1 gelöst. Vorteilhafte Weiterbildungen sind Gegenstand von Unteransprüchen.

Bei dem erfindungsgemäßen Verfahren erfolgt die vollständige Abtastung des Prüfgegenstandes über eine Messung der Wasservorlaufstrecke mittels Ultraschall-Senkrechteinschallung, wobei aus den gemessenen Werten ein Bezugsdurchmesser errechnet wird.

Über eine zusätzliche exakte optische Messung des Durchmessers an einem vorher mittels Ultraschall vermessenen oder zu vermessenden gleichen Ort des Prüfgegenstandes erfolgt eine Kalibrierung bzw. Rekalibrierung der Messwerte für den Bezugsdurchmesser der Ultraschallprüfung, woraus ein exakter Durchmesser an jeder Stelle des Prüfgegenstandes errechnet wird.

Der Vorteil dieses Verfahrens besteht darin, dass einerseits die Messgenauigkeit deutlich erhöht und andererseits der Kalibrieraufwand gegenüber der bekannten Wasservorlaufstreckenmessung deutlich reduziert wird.

Ein etwaiger Verschleiß der mechanischen Bauteile oder Temperaturänderungen des Wassers wirken sich nicht mehr auf die Messgenauigkeit aus, da die Messwerte während oder nach der Ultraschallmessung mit den genauen Werten der optischen Messung "rekalibriert" werden.

Die Rekalibrierung wird wie folgt vorgenommen: Auf einer bekannten Messlinie am Prüfgegenstand bzw. an einem mittels Ultraschall vermessenen Ort wird der mittels Ultraschall gemessene Bezugsdurchmesser des Prüfgegenstandes mit dem hochgenau optisch ermittelten Durchmesserwert korrigiert. Dieser Wert wird dann zur Korrektur sämtlicher anderer Werte für den Durchmesser verwendet.

Aus der Abstandmessung und durch eine einmalige Kalibrierung bekannter geometrischer Verhältnisse kann die Außengeometrie eines Prüfgegenstandes vollständig und detailliert beschrieben werden.

Für Hohlkörper, wie Rohre, kann dann durch Kombination mit der am selben Ort gemessenen Wanddicke in einfacher Weise auch die Innengeometrie des Prüfgegenstandes exakt beschrieben werden.

Vorteilhaft sind sowohl die Ultraschallmessung und die optische Vermessung in einer Prüflinie integriert, was ebenfalls vorteilhaft durch Aufrüsten bereits vorhandener Ultraschallprüflinien erfolgen kann.

Falls die Messungen jedoch in verschiedenen Prüflinien durchgeführt werden sollen, werden die Prüfgegenstände in einer vorteilhaften Weiterbildung der Erfindung mit einem abgestimmten Koordinatennullpunkt markiert, damit in der nachfolgenden Prüflinie eine korrekte Zuordnung der Messorte möglich ist.

Weitere Merkmale, Vorteile und Einzelheiten der Erfindung ergeben sich aus der nachfolgenden Beschreibung.

Es zeigen:
- **Figur 1**: eine Prinzipskizze einer ersten Verfahrensvariante der erfindungsgemäßen Durchmessermessung mit einer umfassenden US-Messung und linearem Materialdurchlauf,
- **Figur 2**: eine Prinzipskizze einer zweiten Verfahrensvariante für die Durchmessermessung mittels einer Scananlage an einem Rohr.

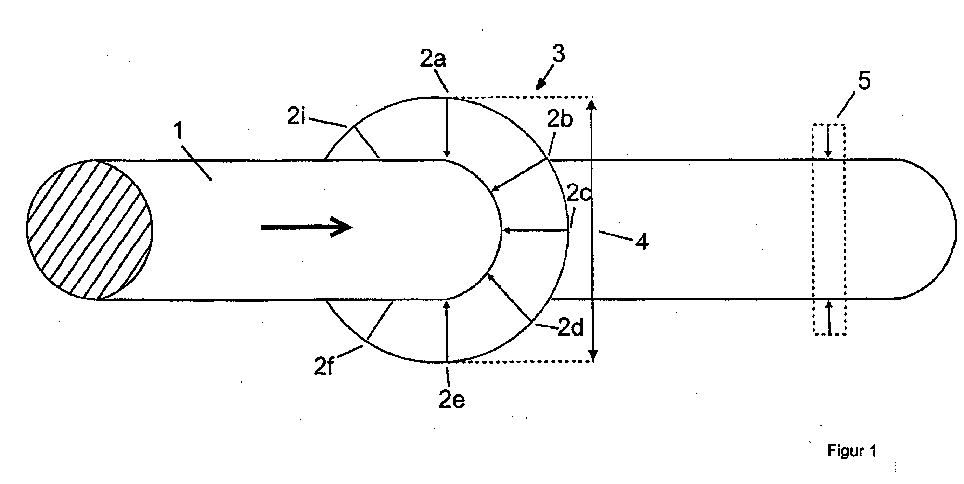

**Figur 1** zeigt in einer Prinzipskizze eine erste Verfahrensvariante der erfindungsgemäßen Durchmessermessung an einem Prüfgegenstand, der in diesem Beispiel ein massiver Rundstahl 1 ist.

Die Durchmessermessung am Rundstahl 1 erfolgt mittels wasserangekoppeltem Ultraschall über eine Wasservorlaufstreckenmessung.

Die Durchlaufrichtung des Rundstahles 1 durch die Prüfvorrichtung ist durch einen Pfeil dargestellt, sie kann jedoch bedarfsweise auch in umgekehrter Richtung erfolgen.

Der Rundstahl 1 läuft entsprechend der Pfeilrichtung linear zunächst in eine Ultraschallprüfeinrichtung 3 ein. Die Ultraschallprüfeinrichtung 3 besteht aus mehreren über dem Umfang des Rundstahles 1 angeordneten Ultraschallprüfköpfen 2a bis 2i, die in Senkrechteinschallung in einem Abstand zum Rundstahl 1 fest positioniert sind. Die Ultraschallprüfköpfe 2a bis 2i können dabei auf einem Kreisbogen angeordnet sein aber auch unterschiedliche Abstände zur Oberfläche des Rundstahl 1 sind denkbar.

Alternativ zur festen Anordnung könnten auch in der Ultraschallprüfeinrichtung 3 ein oder mehrere Ultraschallprüfköpfe um den Prüfgegenstand mechanisch oder elektronisch (phased array) rotieren.

Über die Wasservorlaufstreckenmessung an den jeweiligen Prüfköpfen (hier dargestellt durch Pfeile) wird aus den gemessenen Werten an einem definierten Ort ein Bezugsdurchmesser 4 errechnet.

Ein Vorteil dieser Ultraschallprüfeinrichtung 3 besteht darin, dass die Ultraschallprüfköpfe 2a bis 2i keinen mechanischen Kontakt zur Oberfläche des Rundstahles 1 haben. Ein Verschleiß der bei bekannten Anlagen üblichen Gleitsohlen bzw. Gleitlager mit entsprechenden negativen Auswirkungen auf die Messgenauigkeit ist hier ausgeschlossen.

Derartige Prüfvorrichtungen werden üblicherweise für die Fehlerdetektion im Prüfgegenstand bzw. zusätzlich für die Wanddickenermittlung von Rohren eingesetzt, bei denen dann jedoch die Wasservorlaufstrecke nicht gemessen wird.

Das erfindungsgemäße Verfahren hat den Vorteil, dass bereits bestehende Ultraschallprüfanlagen für Fehler- und Wanddickenprüfung nun auch für eine präzise Durchmesserermittlung genutzt werden können.

Für die zusätzliche Nutzung einer bestehenden Ultraschallprüfvorrichtung für die vollständige Erfassung des Durchmessers von Prüfgegenständen, ist deshalb erfindungsgemäß vorgesehen, die an verschiedenen Stellen am. Umfang des Rundstahles 1 ermittelten Wasservorlaufstrecken zu kalibrieren bzw. zu rekalibrieren, um Ungenauigkeiten bei der Wasservorlaufstreckenmessung über den Umfang des Rundstahles 1 auszugleichen.

Die Kalibrierung bzw. Rekalibrierung geschieht dabei über eine zusätzliche optische Messeinrichtung 5, die der Rundstahl 1 nach der Ultraschallprüfung durchläuft.

Die optische Messeinrichtung 5 ermittelt den Durchmesser des Prüfgegenstandes an einem definierten Messort der Ultraschallprüfung äußerst exakt, wobei mit diesem Messwert laufend die Messwerte für den Bezugsdurchmesser der Wasservorlaufstrecke der Ultraschallmessung kalibriert bzw. rekalibriert werden. Dieser über die optische Messeinrichtung 5 ermittelte exakte Durchmesserwert, wird dann zu Korrektur sämtlicher anderer Werte der Ultraschallmessung verwendet.

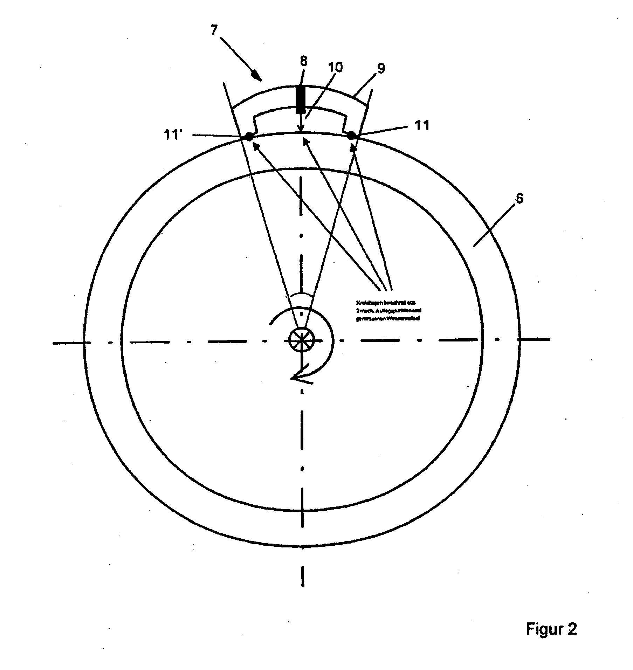

**Figur 2** zeigt in einer Prinzipskizze eine zweite Variante des erfindungsgemäßen Verfahrens zur Durchmessermessung an einem Prüfgegenstand, der in diesem Beispiel ein Rohr ist.

Die Messung des Durchmessers des Rohres 6, geschieht in diesem Fall wie bei bekannten. Anlagen durch Messen der Wasservorlaufstrecke mittels Ultraschall.

Mittels der erfindungsgemäßen zusätzlichen (hier nicht dargestellten) optischen Vermessung des Durchmessers an mindestens einem definierten Ort des Rohres 6, wird, wie bei **Figur 1** beschrieben, der mittels Ultraschall ermittelte Bezugsdurchmesser an dem jeweiligen Ort kalibriert bzw. rekalibriert.

Um den Durchmesser des Rohres 1 vollständig und ortsgenau über die Länge des Rohres 6 ermitteln zu können, wird das Rohr 6 unter der ortsfest positionierten Ultraschallprüfeinrichtung 7 schraubenlinienförmig verfahren. Hierbei rotiert das Rohr 6 und bewegt sich gleichzeitig, wie mit den Pfeilen angedeutet, in Längsrichtung vorwärts.

Wie bei bekannten Ultraschallprüfanlagen ist der US-Prüfkopf 8 in einem bügelförmigen Prüfkopfhalter 9 in einem fixen Abstand zum Rohr 6 fest angeordnet, der über an den jeweiligen Enden des bügelförmigen Prüfkopfhalters 7 angeordneten Gleitsohlen 11, 11' abdichtend auf dem Rohr 6 aufliegt.

Die dabei mit der Rohroberfläche gebildete Kammer ist bei der US-Prüfung mit Wasser gefüllt.

Der Abstand zur Oberfläche des Rohres 6 entspricht der Wasservorlaufstrecke 10, mit dem der Bezugsdurchmesser für das Rohr ermittelt wird.

Zur Ermittlung des Bezugsdurchmessers wird zu Beginn jeder Messung die geometrische Position des US-Prüfkopfes 8 und der Gleitsohlen 11, 11' exakt bestimmt und während der Messung konstant gehalten.

Wie bei der bekannten Durchmessermessung mittels Wasservorlaufstreckenmessung, wird auch hier über die geometrisch bestimmten Auflagepunkte der Gleitsohlen 11, 11' und die Wasservorlaufstreckenmessung ein Kreisbogen erfasst, über den sich der Bezugsdurchmesser berechnen lässt.

Etwaige Messungenauigkeiten, z. B. durch Änderungen der Wassertemperatur und damit der Schallgeschwindigkeit im Wasser oder der Verschleiß der Gleitsohlen 11, 11', die sich auf den ermittelten Bezugsdurchmesser auswirken, werden anschließend erfindungsgemäß über die Kalibrierung bzw. Rekalibrierung der Messwerte über den optisch ermittelten exakten Durchmesser wieder kompensiert.

### Bezugszeichenliste

| **Nr.** | **Bezeichnung** |
|---|---|
| 1 | Rundstahl |
| 2a - 2i | US-Prüfköpfe |
| 3 | US-Prüfeinrichtung |
| 4 | Bezugsdurchmesser |
| 5 | optische Messeinrichtung |
| 6 | Rohr |
| 7 | US-Prüfeinrichtung |
| 8 | US-Prüfkopf |
| 9 | Prüfkopfhalter |
| 10 | Wasservorlaufstrecke |
| 11, 11' | Gleitsohle |

## Patentansprüche

1. Verfahren zur vollständigen Erfassung der Geometrie, insbesondere des Durchmessers von Prüfgegenständen, wie z. B. von Rundstählen oder Rohren mittels Ultraschall, bei dem mit mindestens einem Prüfkopf (8) in einem Abstand unter Wasserankopplung die Mantelfläche des Prüfgegenstandes (1) unter einer Relativbewegung zwischen Prüfkopf (8) und Prüfgegenstand (1) vollständig abgetastet und dabei unter Berücksichtigung der Wasservorlaufstrecke (10) der Durchmesser und bei Rohren der Außendurchmesser und zusätzlich die Wanddicke und der Innendurchmesser ortsgenau ermittelt werden,
**dadurch gekennzeichnet,**
**dass** die vollständige Abtastung des Prüfgegenstandes (1) über eine Messung der Wasservorlaufstrecke (10) mittels Ultraschall-Senkrechteinschallung erfolgt aus der ein Bezugsdurchmesser errechnet wird und über mindestens eine zusätzliche exakte optische Vermessung des Durchmessers an mindestens einem mittels Ultraschall vermessenen oder zu vermessenden gleichen Ort des Prüfgegenstandes (1) eine Kalibrierung bzw. Rekalibrierung der Messwerte für den Bezugsdurchmesser der Ultraschallprüfung erfolgt und daraus ein exakter Durchmesser an jeder Stelle des Prüfgegenstandes (1) errechnet wird.

2. Verfahren nach Anspruch 1
**dadurch gekennzeichnet,**
**dass** die zusätzliche optische Vermessung vor, während oder nach der Ultraschallprüfung durchgeführt wird.

3. Verfahren nach Anspruch 2
**dadurch gekennzeichnet,**
**dass** die Ultraschallprüfung und die optische Vermessung in einer Prüflinie durchgeführt wird.

4. Verfahren nach Anspruch 2
**dadurch gekennzeichnet,**
**dass** die zusätzliche optische Vermessung nach der Ultraschallprüfung in einer separaten Prüflinie durchgeführt wird.

5. Verfahren nach Anspruch 4
**dadurch gekennzeichnet,**
**dass** vor der optischen Vermessung der Prüfgegenstand (1) in der Prüflinie für die Ultraschallprüfung mit einem den jeweiligen Messort identifizierenden Koordinatennullpunkt markiert wird, mit dem eine exakte Zuordnung des Messortes bei der Kalibrierung durch die optische Vermessung ermöglicht wird.

6. Verfahren nach einem der Ansprüche 1 - 5
**dadurch gekennzeichnet,**
**dass** bei der Prüfung von Rohren neben der Erfassung des Außendurchmessers am selben Ort die Wanddicke erfasst wird.

7. Verfahren nach Anspruch 6
**dadurch gekennzeichnet,**
**dass** aus der ortsgenauen Erfassung des Außendurchmessers und der zugeordneten Wanddicke ein ortsgenauer Innendurchmesser ermittelt wird.

## Claims

1. A method for the complete detection of the geometry, in particular the diameter, of test objects, such as round steel bars or tubes, by means of ultrasound, in which the generated surface of the test object (1) is scanned completely with at least one test head (8) while maintaining a distance with water coupling with a relative movement between the test head (8) and test object (1), and in so doing, taking into account the water path (10), the diameter and in the case of tubes the external diameter and additionally the wall thickness and the internal diameter are determined for precise locations,
**characterised in that**
the complete scanning of the test object (1) takes place by a measurement of the water path (10) by means of vertical ultrasound generation, from which a reference diameter is calculated and by means of at least one additional precise optical measurement of the diameter at at least one identical location of the test object (1) which is measured or is to be measured by means of ultrasound, a calibration or recalibration of the measured values for the reference diameter of the ultrasonic testing takes place, and a precise diameter at each point of the test object (1) is calculated therefrom.

2. A method according to Claim 1, **characterised in that** the additional optical measurement is carried out before, during or after the ultrasonic testing.

3. A method according to Claim 2, **characterised in that** the ultrasonic testing and the optical measurement are carried out in a testing line.

4. A method according to Claim 2, **characterised in that** the additional optical measurement is carried out after the ultrasonic testing in a separate testing line.

5. A method according to Claim 4, **characterised in that** before the optical measurement the test object (1) is marked with a coordinate origin which identifies the respective measurement location in the testing line for the ultrasonic testing, with which origin precise allocation of the measuring location is permitted in the calibration by the optical measurement.

6. A method according to one of Claims 1 - 5, **characterised in that** when testing tubes, in addition to the detection of the external diameter the wall thickness is detected at the same location.

7. A method according to Claim 6, **characterised in that** an internal diameter for precise locations is determined from the detection for precise locations of the external diameter and the associated wall thickness.

## Revendications

1. Procédé de détection complète de la géométrie, en partie du diamètre d'objets d'essai, par exemple des ronds à béton ou des tubes, au moyen d'ultrasons, dans lequel, à l'aide d'au moins une tête d'essai (8) disposée à une certaine distance sous couplage d'eau, la surface de la chemise de l'objet d'essai (1) est complètement détectée dans le cadre d'un déplacement relatif entre la tête d'essai (8) et l'objet d'essai (1) et, en l'occurrence, en tenant compte de la chasse d'eau négative (10), on détermine le diamètre et, dans le cas de tubes, le diamètre externe et également l'épaisseur de paroi et le diamètre interne de manière précise,
**caractérisé en ce que**
la détection complète de l'objet d'essai (1) se fait via une mesure de la chasse d'eau négative (10) par exposition verticale aux ultrasons, à partir de laquelle un diamètre de référence est calculé, on effectue, via au moins une mesure optique supplémentaire exacte du diamètre en au moins un point identique de l'objet d'essai (1) mesuré ou à mesurer par ultrasons, un calibrage ou un recalibrage des valeurs des mesure pour le diamètre de référence de l'essai aux ultrasons et on en tire par calcul un diamètre exact en chaque point de l'objet d'essai (1).

2. Procédé selon la revendication 1,
**caractérisé en ce que**
la mesure optique supplémentaire est réalisée avant, pendant ou après l'essai aux ultrasons.

3. Procédé selon la revendication 2,
**caractérisé en ce que**
l'essai aux ultrasons et la mesure optique sont réalisés dans une ligne d'essai.

4. Procédé selon la revendication 2,
**caractérisé en ce que**
la mesure optique supplémentaire est effectuée après l'essai aux ultrasons dans une ligne d'essai séparée.

5. Procédé,selon la revendication 4,
**caractérisé en ce que**,
avant la mesure optique, l'objet d'essai (1) est marqué dans la ligne d'essai pour l'essai aux ultrasons avec un point zéro de coordonnées identifiant le point de mesure respectif, avec lequel une affectation exacte du point de mesure est permise lors du calibrage par la mesure optique.

6. Procédé selon l'une quelconque des revendications 1 à 5,
**caractérisé en ce que**,
lors de l'essai de tubes, on détecte, à côté de la détermination du diamètre externe, l'épaisseur de paroi au même point.

7. Procédé selon la revendication 6,
**caractérisé en ce que**
l'on détermine à partir de la détection précise du diamètre externe et de l'épaisseur de paroi correspondante un diamètre interne précis.
